# EUROPEAN PATENT SPECIFICATION

(11) **EP 3 695 950 B1**
(45) Date of publication and mention of the grant of the patent: **03.08.2022**
(21) Application number: 20157068.6
(22) Date of filing: 13.02.2020
(51) Int. Cl.: B29C 45/14, H05B 3/86, H05B 3/00

(54) **DEFROST/HEATING SOLUTION FOR GLAZED POLYCARBONATE**
ABTAU-/HEIZLÖSUNG FÜR VERGLASTES POLYCARBONAT
SOLUTION DE DÉGIVRAGE/CHAUFFAGE DE POLYCARBONATE VITRÉ

(30) Priority: 15.02.2019 US 201962806375 P
(43) Date of publication of application: 19.08.2020
(73) Proprietor: Magna Exteriors Inc., Concord, Ontario L4K 4J5 (CA)
(72) Inventor: Thanou, Pinelopi, PETOSKEY, MI 49770 (US)
(74) Representative: Glawe, Delfs, Moll

(56) References cited:
- EP-A2- 0 193 464
- EP-A2- 0 193 464
- DE-A1-102008 015 853
- DE-A1-102008 015 853

## Description

### FIELD OF THE INVENTION

The present invention relates to a defrost/heating solution for glazed polycarbonate.

### BACKGROUND OF THE INVENTION

There is a drive in the automotive field to reduce weight in the cars in order to achieve savings in fuel, or better mileage when it comes to EV vehicles, provide better aerodynamics and improved climate control. One way to contribute to the weight reduction is with replacing glass with polycarbonate. Backlight windows and radar covers are good candidates of parts that can be replaced with glazed polycarbonate.

DE 10 2008 015 853 A1 relates to a method involving imprinting a heating conductor on a plastic layer in a silk-screen printing process. The layer is formed as a foil, a plate or as an injection molding part. Monofilament polyester interwoven is used as a screen printing fabric for imprinting the heating conductor. An electrically conductive paste is used with silver particles as screen-printing ink for imprinting the heating conductor. The heating conductor is interlaced during a thermal treatment and/or deformation.

EP 0 193 464 A2 discloses a manufacturing process of an electrical heated window by printing a set of conductors formed of collective conductors and of heating conductors, with the aid of the silk-screening printing method, use is made of a silk-screen printing from having a uniformly thick coating, the silk-screen fabric of which has, in the regions of the collective conductors, a mesh size larger than in the regions of the heating conductors.

### SUMMARY OF THE INVENTION

A plastic polycarbonate film is silk screen printed or printed with a robotic application or any other printing application, with a defrost grid composed from a flexible circuit of a silver or other thermoformable conductive inks and then trimmed/die cut to size creating a decorated insert. Once the decorated insert is trimmed to size it is placed into an injection mold.

In the molding process, the decorated insert is placed into the cavity or onto the core of an injection mold that has been designed for in-mold decorating. The desired molding resin is shot behind or over the insert, bonding its surface to the decorated insert and forming an integral finished part.

The advantage of this solution as described lays on the fact that the defrost grid can be at the outside surface of the window while is still completely protected with hard coat material over the polycarbonate or other equivalent hard coat technology, that will provide high level abrasion resistance and long term weathering so that the desired heat transfer rate to meet OEM requirements can be achievable.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

### BRIEF DESCRIPTION OF THE DRAWINGS

The present invention will become more fully understood from the detailed description and the accompanying drawings, wherein:
Fig. 1 is a schematic view of the method of creating a defrost on a polymer substrate according to one embodiment of the present invention.
Fig. 2 is a finished polycarbonate panel with a defrost according to one embodiment of the present invention.
Fig. 3 is a partial cross-sectional view of a portion of the defrost and the polycarbonate panel according to the present invention.
Fig. 4 is a cross-sectional view of a portion of a screen printed defrost according to the present invention.

### DETAILED DESCRIPTION OF THE PREFERRED EMBODIMENTS

The following description of the preferred embodiment(s) is merely exemplary in nature and is in no way intended to limit the invention, its application, or uses.

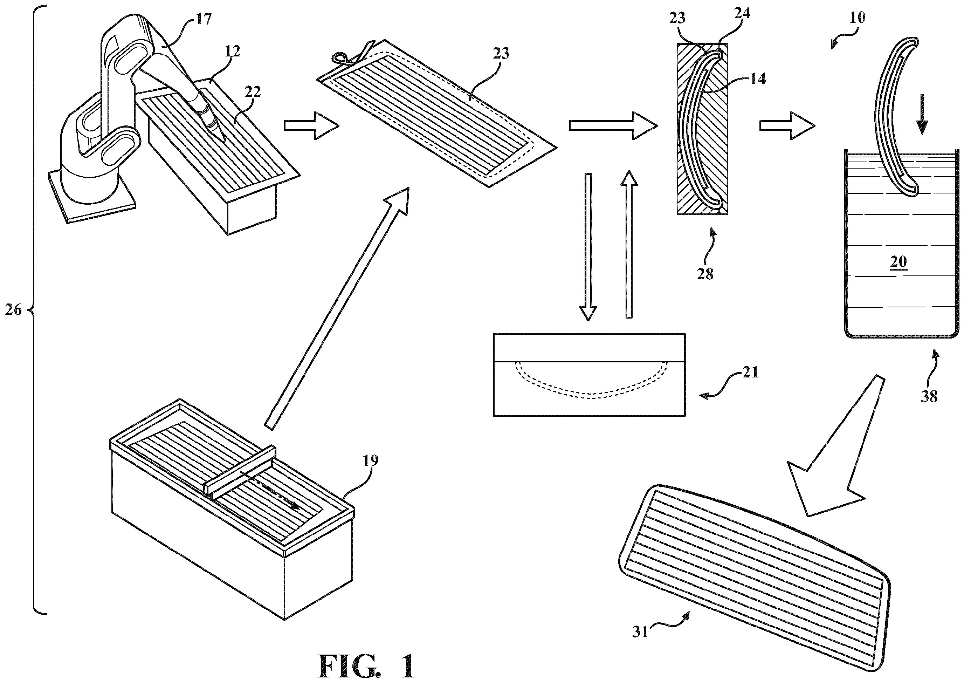

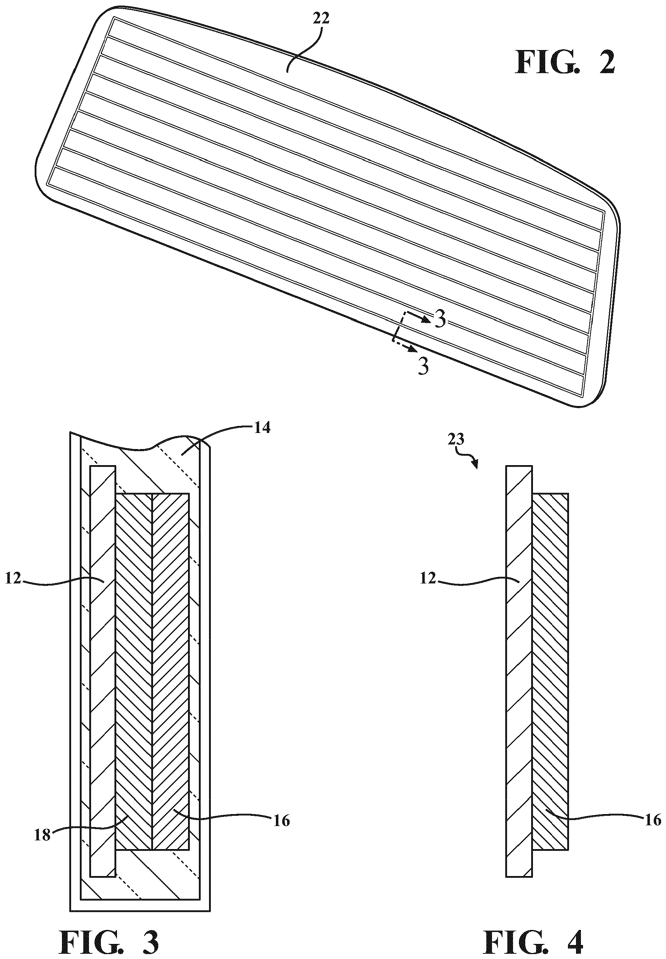

Referring now to Fig. 1 a schematic view of a method 10 of forming a defrost on a polymer substrate, such as polycarbonate is shown. Also the steps include providing several types of materials to form a layered structure. Referring also to Figs. 3 and 4, the materials include a polymer film 12, typically formed of a thin layer of polycarbonate. The polymer film 12 is relatively thin with a thickness of generally less than about 0.254 mm (0.01 inches), preferably about 0.1016 mm (0.004 inches) to 0.381 mm (0.015 inches) and specifically between about 0.127 mm (0.005 inches) and 0.254 mm (0.01 inches). Also provided is a thermoformable conductive ink 16, such as silver ink. Another material utilized is a hard coat material 20, which in a preferred embodiment of the invention is polysiloxane.

The method also includes providing a robotic printer arm 17 or silk screen 19 that has a template in the shape of a conductive circuit 22. The robotic printer arm 17 is programmed to print the shape of the conductive circuit 22 thereby creating a decorative insert 23. Additionally the method includes providing a mold with a mold cavity 24 that is shaped to receive the decorative insert 23.

As depicted in Fig. 1 the method 10 begins by creating the decorative insert 23 by printing 26 the thermoformable conductive ink 16 onto the polymer film 12 in the shape of the conductive circuit 22. In an optional embodiment of the invention there is a binder layer 18 (shown in Fig. 3) between the conductive ink 16 and the polymer film 12 that assists in binding the conductive ink 16 to the polymer film 12. However, the use of the binder layer 18 is not necessary for all applications. The conductive ink 16 is made of electrically conductive material such as silver. In applications where the silk screen is used, the silk screen is designed to have apertures in the shape of the conductive circuit 22. The silk screen is placed over the polymer film 12 and the thermoformable conductive ink 16 is applied over the silk screen. The thermoformable conductive ink 16 passes through the apertures of the silk screen to deposit the ink on the polymer film 12 in the shape of the conductive circuit 22. It is also within the scope of this invention for the robotic printer arm to be used rather than silk screen.

Next the decorative insert is trimmed to the appropriate size and then a step of placing 28 the decorative insert 23 into the mold cavity 24 occurs. The mold is then closed and a polymer substrate 14 is injected behind the decorative insert 23. The polymer substrate 14 can be any suitable polymer depending on the needs of a particular application. In a preferred embodiment of the invention the polymer substrate 14 is a polycarbonate material that has a suitable transparency level to be use for windshields, sunroofs and light lens covers. During this injection step the decorative insert 23 can flex or bend to form an appropriate shape depending upon the contours of the mold cavity 24 and the pressure exerted by the molten polymer substrate being backfilled onto the decorative insert 23.

Next a step of opening the mold and removing from the mold cavity 24 the polymer substrate with decorative insert attached occurs. Then during a coating step 30 the hard coat material 20 is applied over the side of the decorative insert 23 that has the conductive circuit connected thereon. Alternatively the polymer substrate with decorative insert is dipped into the hard coat material, thereby coating all exposed surfaces. The hard coat material can be applied either by spraying or by dipping. The hard coating material is any material suitable for providing a hard coating layer over the polymer substrate 14 and decorative insert 23. In a preferred embodiment of the invention the hard coat material is a polysiloxane. After the coating step 30 a finished part 31 is completed. The finished part 31 when compared to conventional glass provides about a 40% weight reduction, higher Impact strength and better insulating properties since thermal conductivity of PC is lower than glass. The finished part 31 also has a greater resistance to cracks and shattering, high ductility and high durability. The use of the hard coating process provides long term weathering, and abrasion resistance.

Between the silk screen step 26 and the step of placing 28 the decorative insert into the mold, there can be an optional thermoforming step. However, the decorative insert has a low thickness (between 0.127 mm (0.005 inches) and 0.254 mm (0.01 inches)) of the PC sheet (carriers of the screen printed decoration), and once placed at the mold it will take that shape once they start getting heated; thereby eliminating the need for an additional thermoforming step. With regard to the hard coating step, the whole system is coated with the polysiloxane hard coat preferably the AS4700/SHP470 System (Lexamar's dip coat system or other).

Regarding the conductive circuit 22, it is a defrost grid composed of a flexible circuit composed of silver thermoform able conductive Ink. Lines shall have a uniform thickness, evenly spaced and parallel. The conductive circuit 22 shall be powered by a source of 12.5 V nominal ranging from 9-16 V. Max Current draw 20 A, at average room temperature when 12.5 +- 0.1 VDC is applied. The conductive circuit 22 has lines that have a width that is less than or equal to 1 mm, with spacing between the lines being one in the range between 25-30 mm currently used for heater grids on glass windows. The conductive circuit 22 is connected to a terminal connection. The terminal connections to bus are to exceed 100 N. Heated assemblies must not exceed a maximum surface temperature of 65 ° C in uncovered areas accessible from inside of vehicle and a maximum of 70 ° C in areas which are not accessible.

The description of the invention is merely exemplary in nature and, thus, variations that do not depart from the scope of the invention, as set forth by the claims, are intended to be within the scope of the invention. Such variations are not to be regarded as a departure from the scope of the invention.

## Claims

1. A method (10) of creating a defrost on a polymer substrate (14) comprising the steps of:
providing a polymer film (12), thermoformable conductive ink (16), polymer substrate (14) and a hard coat material (20), wherein the polymer film (12) and polymer substrate (14) are polycarbonate and wherein the polymer film (12) has a thickness between 0.127 mm (0.005 inches) and 0.254 mm (0.01 inches);
providing a silk screen having a template in the shape of a conductive circuit (22);
providing a mold with the mold cavity (24) shaped to receive a decorative insert (23);
silk screening the thermoformable conductive ink (16) onto the polymer film (12) in the shape of a conductive circuit (22) to create a decorative insert (23);
trimming the decorative insert (23);
placing the decorative insert (23) into the mold cavity (24) of the mold;
closing the mold and injecting the polymer substrate (14) to the back side of the decorative insert (23), wherein the decorative insert (23) will flex or bend to form an appropriate shape depending upon a contour of the mold cavity (24) and the pressure exerted by the polymer substrate (14);
opening the mold and removing from the mold cavity (24) the decorative insert (23) with the polymer substrate (14) attached, and
applying the hard coat material (20) over the decorative insert (23) with polymer substrate (14) attached, thereby creating a finished part (31).

2. A method (10) of creating a defrost on a polymer substrate (14) comprising the steps of:
providing a polymer film (12), thermoformable conductive ink (16), polymer substrate (14) and a hard coat material (20), wherein the polymer film (12) and polymer substrate (14) are polycarbonate and wherein the polymer film (12) has a thickness between 0.127 mm (0.005 inches) and 0.254 mm (0.01 inches);
providing a robotic printer arm (17) programmed with a template in the shape of a conductive circuit (22);
providing a mold with the mold cavity (24) shaped to receive a decorative insert (23);
printing a conductive circuit (22) onto the polymer film (12) with the robotic printer arm (17) by applying the thermoformable conductive ink (16) in a pattern onto the polymer film (12) to create a decorative insert (23);
trimming the decorative insert (23);
placing the decorative insert (23) into the mold cavity (24) of the mold;
closing the mold and injecting the polymer substrate (14) to the back side of the decorative insert (23), wherein the decorative insert (23) will flex or bend to form an appropriate shape depending upon a contour of the mold cavity (24) and the pressure exerted by the polymer substrate (14);
opening the mold and removing from the mold cavity the decorative insert (23) with the polymer substrate (14) attached, and
applying the hard coat material (20) over the decorative insert (23) with polymer substrate attached, thereby creating a finished part (31).

3. The method (10) of claim 1 or 2, wherein the thermoformable conductive ink (16) includes silver.

4. The method (10) of any one of claims 1 to 3, wherein the hard coat material (20) is polysiloxane hard coat.

5. The method (10) of any one of claims 1 to 4, further comprising the step of thermoforming the decorative insert (23) prior to placing the decorative insert (23) into the mold cavity (24).

6. A finished part (31) with a conductive circuit (22) comprising:
a polymer film layer (12), further comprising the polymer film layer (12) is a polycarbonate film layer, and wherein the polymer film layer (12) has a thickness between 0.127 mm (0.005 inches) and 0.254 mm (0.01 inches);
a conductive circuit formed from thermoformable conductive ink (16) formed on the polymer film layer (12);
a polycarbonate substrate (14) connected to the polymer film layer (12) at a side opposite the conductive circuit (22);
a hard coat material (20) applied to the polymer film layer (12) and covering the conductive circuit (22).

7. The finished part (31) of claim 6, further comprising a binder (18) located between the conductive circuit (22) and the polymer film layer (12).

8. The finished part (31) of any one of claims 6 or 7, wherein the hard coat material (20) is polysiloxane hard coat.

9. The finished part (31) of any one of claims 6 to 8, wherein the thermoformable conductive ink (16) includes silver.

## Patentansprüche

1. Verfahren (10) zur Erzeugung von Entfrosten auf einem Polymersubstrat (14) mit den Schritten:
Bereitstellen eines Polymerfilms (12), einer thermoformbaren leitfähigen Tinte (16), eines Polymersubstrats (14) und eines harten Beschichtungsmaterials (20), wobei der Polymerfilm (12) und das Polymersubstrat (14) Polycarbonat sind und wobei der Polymerfilm (12) eine Dicke zwischen 0,127 mm (0,005 Inch) und 0,254 mm (0,01 Inch) aufweist,
Bereitstellung eines Siebdruckes mit einer Schablone in Form einer leitenden Schaltung (22),
Bereitstellen einer Form, deren Hohlraum (24) zur Aufnahme eines dekorativen Einsatzes (23) geformt ist,
Siebdruck der thermoformbaren leitfähigen Tinte (16) auf die Polymerfolie (12) in Form einer leitfähigen Schaltung (22), um einen dekorativen Einsatz (23) zu schaffen,
Beschneiden des dekorativen Einsatzes (23),
Einsetzen des dekorativen Einsatzes (23) in den Formhohlraum (24) der Form,
Schließen der Form und Einspritzen des Polymersubstrats (14) auf die Rückseite des dekorativen Einsatzes (23), wobei sich der dekorative Einsatz (23) biegt oder krümmt, um eine geeignete Form in Abhängigkeit von einer Kontur des Formhohlraums (24) und dem durch das Polymersubstrat (14) ausgeübten Druck zu bilden,
Öffnen der Form und Entfernen des dekorativen Einsatzes (23) mit dem daran befestigten Polymersubstrat (14) aus dem Formhohlraum (24) und
Auftragen des Hartbeschichtungsmaterials (20) auf den dekorativen Einsatz (23) mit angebrachtem Polymersubstrat (14), wodurch ein fertiges Teil (31) entsteht.

2. Verfahren (10) zum Entfrosten auf einem Polymersubstrat (14) mit:
Bereitstellen eines Polymerfilms (12), einer thermoformbaren leitfähigen Tinte (16), eines Polymersubstrats (14) und eines harten Beschichtungsmaterials (20), wobei der Polymerfilm (12) und das Polymersubstrat (14) Polycarbonat sind und wobei der Polymerfilm (12) eine Dicke zwischen 0,127 mm (0,005 Inch) und 0,254 mm (0,01 Inch) aufweist,
Bereitstellung eines Roboter-Druckerarms (17), der mit einer Schablone in Form einer leitenden Schaltung (22) programmiert ist,
Bereitstellen einer Form, deren Hohlraum (24) zur Aufnahme eines dekorativen Einsatzes (23) geformt ist,
Drucken einer leitfähigen Schaltung (22) auf die Polymerfolie (12) mit dem Roboterdruckerarm (17) durch Auftragen der thermoformbaren leitfähigen Tinte (16) in einem Muster auf den Polymerfilm (12), um einen dekorativen Einsatz (23) zu erzeugen,
Beschneiden des dekorativen Einsatzes (23),
Einsetzen des dekorativen Einsatzes (23) in den Formhohlraum (24) der Form,
Schließen der Form und Einspritzen des Polymersubstrats (14) auf die Rückseite des dekorativen Einsatzes (23), wobei sich der dekorative Einsatz (23) biegt oder krümmt, um eine geeignete Form in Abhängigkeit von einer Kontur des Formhohlraums (24) und dem durch das Polymersubstrat (14) ausgeübten Druck zu bilden,
Öffnen der Form und Entfernen des dekorativen Einsatzes (23) mit dem daran befestigten Polymersubstrat (14) aus dem Formhohlraum und
Auftragen des harten Beschichtungsmaterials (20) auf den dekorativen Einsatz (23) mit angebrachtem Polymersubstrat, wodurch ein fertiges Teil (31) entsteht.

3. Verfahren (10) nach Anspruch 1 oder 2, wobei die thermoformbare leitfähige Tinte (16) Silber enthält.

4. Verfahren (10) nach einem der Ansprüche 1 bis 3, wobei das harte Beschichtungsmaterial (20) eine Polysiloxan-Hartschicht ist.

5. Verfahren (10) nach einem der Ansprüche 1 bis 4 mit ferner dem Schritt des Thermoformens des dekorativen Einsatzes (23) vor dem Einsetzen des dekorativen Einsatzes (23) in den Formhohlraum (24).

6. Fertigteil (31) mit einer leitfähigen Schaltung (22) mit:
einer Polymerfilmschicht (12), die ferner umfasst, dass die Polymerfilmschicht (12) eine Polycarbonatfilmschicht ist, und wobei die Polymerfilmschicht (12) eine Dicke zwischen 0,127 mm (0,005 Inch) und 0,254 mm (0,01 Inch) aufweist,
einer leitenden Schaltung, die aus einer auf der Polymerfilmschicht (12) gebildeten thermoformbaren leitenden Tinte (16) gebildet wird,
einem Polycarbonatsubstrat (14), das mit der Polymerfilmschicht (12) auf einer der leitenden Schaltung (22) gegenüberliegenden Seite verbunden ist,
einem harten Beschichtungsmaterial (20), das auf die Polymerfilmschicht (12) aufgebracht ist und die leitende Schaltung (22) bedeckt.

7. Fertigteil (31) nach Anspruch 6 mit ferner einem Bindemittel (18), das sich zwischen der leitenden Schaltung (22) und der Polymerfilmschicht (12) befindet.

8. Fertigteil (31) nach einem der Ansprüche 6 oder 7, wobei das harte Beschichtungsmaterial (20) eine Polysiloxan-Hartschicht ist.

9. Fertigteil (31) nach einem der Ansprüche 6 bis 8, wobei die thermoformbare leitfähige Tinte (16) Silber enthält.

## Revendications

1. Procédé (10) de création d'un dégivrage sur un substrat polymère (14) comprenant les étapes consistant à :
fournir un film polymère (12), une encre conductrice thermoformable (16), un substrat polymère (14) et un matériau de revêtement dur (20), dans lequel le film polymère (12) et le substrat polymère (14) sont des polycarbonates et
dans lequel le film polymère (12) a une épaisseur entre 0,127 mm (0,005 pouce) et 0,254 mm (0,01 pouce) ;
fournir un écran de soie ayant un modèle dans la forme d'un circuit conducteur (22) ;
fournir un moule avec la cavité de moule (24) conformée pour recevoir un insert décoratif (23) ;
sérigraphier l'encre conductrice thermoformable (16) sur le film polymère (12) dans la forme d'un circuit conducteur (22) pour créer un insert décoratif (23) ;
rogner l'insert décoratif (23) ;
placer l'insert décoratif (23) dans la cavité de moule (24) du moule ;
fermer le moule et injecter le substrat polymère (14) sur le côté arrière de l'insert décoratif (23), dans lequel l'insert décoratif (23) va fléchir ou plier pour former une forme appropriée en dépendance d'un contour de la cavité de moule (24) et de la pression exercée par le substrat polymère (14) ;
ouvrir le moule et enlever de la cavité de moule (24) l'insert décoratif (23) avec le substrat polymère (14) fixé, et
appliquer le matériau de revêtement dur (20) sur l'insert décoratif (23) avec le substrat polymère (14) fixé, créant ainsi une pièce finie (31).

2. Procédé (10) de création d'un dégivrage sur un substrat polymère (14) comprenant les étapes consistant à :
fournir un film polymère (12), une encre conductrice thermoformable (16), un substrat polymère (14) et un matériau de revêtement dur (20), dans lequel le film polymère (12) et le substrat polymère (14) sont en polycarbonate et dans lequel le film polymère (12) a une épaisseur entre 0,127 mm (0,005 pouce) et 0,254 mm (0,01 pouce) ;
fournir un bras d'impression robotique (17) programmé avec un modèle dans la forme d'un circuit conducteur (22) ;
fournir un moule avec la cavité de moule (24) conformée pour recevoir un insert décoratif (23) ;
imprimer un circuit conducteur (22) sur le film polymère (12) avec le bras d'impression robotique (17) en appliquant l'encre conductrice thermoformable (16) en un motif sur le film polymère (12) pour créer un insert décoratif (23) ;
rogner l'insert décoratif (23) ;
placer l'insert décoratif (23) dans la cavité de moule (24) du moule ;
fermer le moule et injecter le substrat polymère (14) sur le côté arrière de l'insert décoratif (23), dans lequel l'insert décoratif (23) va fléchir ou plier pour former une forme appropriée en dépendance d'un contour de la cavité de moule (24) et de la pression exercée par le substrat polymère (14) ;
ouvrir le moule et enlever de la cavité de moule l'insert décoratif (23) avec le substrat polymère (14) fixé, et
appliquer le matériau de revêtement dur (20) sur l'insert décoratif (23) avec le substrat polymère fixé, créant ainsi une pièce finie (31).

3. Procédé (10) selon la revendication 1 ou 2, dans lequel l'encre conductrice thermoformable (16) inclut de l'argent.

4. Procédé (10) selon l'une quelconque des revendications 1 à 3, dans lequel le matériau de revêtement dur (20) est un revêtement dur au polysiloxane.

5. Procédé (10) selon l'une quelconque des revendications 1 à 4, comprenant en outre l'étape consistant à thermoformer l'insert décoratif (23) avant de placer l'insert décoratif (23) dans la cavité de moule (24).

6. Pièce finie (31) avec un circuit conducteur (22) comprenant :
une couche de film polymère (12), comprenant en outre la couche de film polymère (12) qui est une couche de film polycarbonate, et dans lequel la couche de film polymère (12) a une épaisseur entre 0,127 mm (0,005 pouce) et 0,254 mm (0,01 pouce) ;
un circuit conducteur formé à partir de l'encre conductrice thermoformable (16) formée sur la couche de film polymère (12) ;
un substrat polycarbonate (14) connecté à la couche de film polymère (12) au niveau d'un côté opposé au circuit conducteur (22) ;
un matériau de revêtement dur (20) appliqué sur la couche de film polymère (12) et couvrant le circuit conducteur (22).

7. Pièce finie (31) selon la revendication 6, comprenant en outre un liant (18) situé entre le circuit conducteur (22) et la couche de film polymère (12).

8. Pièce finie (31) selon l'une quelconque des revendications 6 ou 7, dans laquelle le matériau de revêtement dur (20) est un revêtement dur au polysiloxane.

9. Pièce finie (31) selon l'une quelconque des revendications 6 à 8, dans laquelle l'encre conductrice thermoformable (16) inclut de l'argent.
